# EUROPEAN PATENT APPLICATION

(11) **EP 4 538 654 A1**
(43) Date of publication of application: **16.04.2025**
(21) Application number: 23819855.0
(22) Date of filing: 06.06.2023
(51) Int. Cl.: G01F 1/66, G01N 29/024, G01N 29/32

(54) **PHYSICAL QUANTITY MEASUREMENT DEVICE**

(30) Priority: 08.06.2022 JP 2022092656
(71) Applicant: Panasonic Intellectual Property Management Co., Ltd., Kadoma-shi, Osaka 571-0057 (JP)
(72) Inventor: KONISHI, Ryohei, Kadoma-shi, Osaka 571-0057 (JP); MIYOSHI, Asako, Kadoma-shi, Osaka 571-0057 (JP); NAKABAYASHI, Yuuji, Kadoma-shi, Osaka 571-0057 (JP); SATOU, Masato, Kadoma-shi, Osaka 571-0057 (JP); MATSUDA, Masataka, Kadoma-shi, Osaka 571-0057 (JP); TAKAKURA, Yuya, Kadoma-shi, Osaka 571-0057 (JP)
(74) Representative: SSM Sandmair
(86) International application number: PCT/JP2023/021058
(87) International publication number: WO 2023/238875

(57) **Abstract**

An object of the present disclosure is to provide a physical quantity measuring device which allows a main flow channel for use to measure the flow rate of a gas containing water and a sub-flow channel, to which water drops are caused to flow out, to be formed of a smaller number of members when the flow rate is measured. A physical quantity measuring device according to the present disclosure includes: a flow channel body having an internal space with an opening; a flow channel lid for use to close the opening of the flow channel body; a main flow channel formed in an internal space of the flow channel body; an upstream opening provided upstream of the main flow channel; a downstream opening provided downstream of the main flow channel; a sub-flow channel provided outside the main flow channel to connect the upstream opening and the downstream opening to each other; and a flow rate measuring sensor provided for the main flow channel. The sub-flow channel is formed as a region surrounded with the flow channel body and the flow channel lid.

## Description

### Technical Field

The present disclosure relates to a physical quantity measuring device for measuring a physical quantity of a gas without the influence of water drops, for example, on a fluid containing water.

### Background Art

Patent Literature 1 discloses a physical quantity measuring device for measuring either the flow rate of a fluid or the concentration of a component included in the fluid without the influence of water drops, for example, on the fluid containing water. In this physical quantity measuring device, a sub-flow channel, to which water drops are allowed to flow out, is formed by inserting a sub-flow channel forming member into a recess of a flow channel body. In addition, a main flow channel is formed by capping the recess of the flow channel body with a flow channel lid from over the recess. That is to say, the main flow channel for use to measure the physical quantity and the sub-flow channel to which the water drops are caused to flow out are formed of three members, namely, the flow channel body, the sub-flow channel forming member, and the flow channel lid.

### Citation List

### Patent Literature

### Patent Literature 1: JP 2022-25751 A

### Summary of Invention

An object of the present disclosure is to provide a physical quantity measuring device which allows a main flow channel for use to measure the flow rate of a gas and a sub-flow channel, to which water drops are caused to flow out, to be formed of two members when the flow rate of the gas is measured without the influence of water drops, for example, on a fluid containing water.

A physical quantity measuring device according to the present disclosure includes a flow channel body, a flow channel lid, a main flow channel, a flow rate measuring sensor, a signal processing unit, an upstream opening, a downstream opening, and a sub-flow channel. The flow channel body has an internal space with an opening. The flow channel lid is used to close the opening. The main flow channel is formed in the internal space. The flow rate measuring sensor is provided for the main flow channel. The signal processing unit measures a flow rate of a fluid on receiving a signal from the flow rate measuring sensor. The upstream opening is provided upstream of the main flow channel. The downstream opening is provided downstream of the main flow channel. The sub-flow channel is provided outside the main flow channel to connect the upstream opening and the downstream opening to each other. The sub-flow channel is formed as a region surrounded with the flow channel body and the flow channel lid.

### Brief Description of Drawings

FIG. 1 illustrates a configuration for a physical quantity measuring device as well as a perspective view illustrating the appearance of a flow channel part according to a first embodiment;
FIG. 2 is an exploded diagram of the flow channel part according to the first embodiment shown in FIG. 1;
FIG. 3 is a partially cutaway exploded diagram illustrating the flow channel part according to the first embodiment shown in FIG. 1;
FIG. 4A is a schematic cross-sectional view of the flow channel part according to the first embodiment taken along a plane A1-A2 shown in FIG. 1;
FIG. 4B is an exploded diagram of the flow channel part shown in FIG. 1;
FIG. 5A is a cross-sectional view of the flow channel part according to the first embodiment taken along a plane B1-B2 shown in FIG. 1;
FIG. 5B is a schematic cross-sectional view taken along a plane C1-C2 shown in FIG. 5A;
FIG. 6A is a schematic vertical cross-sectional view of a flow channel part of a physical quantity measuring device according to a second embodiment;
FIG. 6B is an exploded diagram of the flow channel part of the physical quantity measuring device;
FIG. 7A is a schematic vertical cross-sectional view of a flow channel part of a physical quantity measuring device according to a third embodiment;
FIG. 7B is an exploded diagram of the flow channel part of the physical quantity measuring device; and
FIG. 8 is a partial cross-sectional view of a flow channel part of a known physical quantity measuring device.

### Description of Embodiments

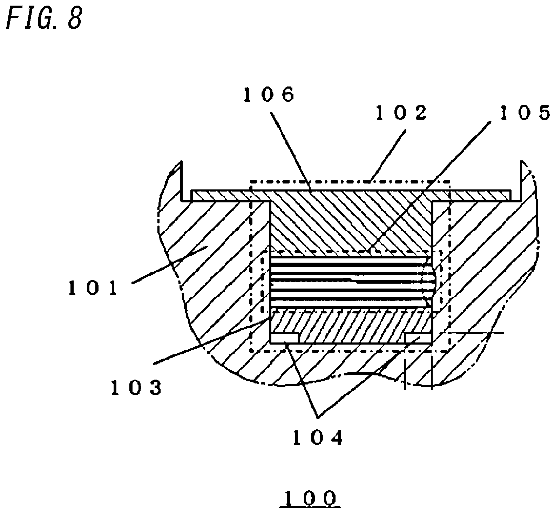

When the present inventors conceived the concept of the present disclosure, a physical quantity measuring device 100 such as the one shown in FIG. 8 was available as a device for performing a method of forming a sub-flow channel for removing water drops from the fluid under measurement for the purpose of measuring a physical quantity such as the flow rate of a gas containing water. FIG. 8 is a partial cross-sectional view of a flow channel part of such a physical quantity measuring device 100. According to this configuration, a sub-flow channel 104 to which water drops are caused to flow out is formed by inserting a sub-flow channel forming member 103 into a recess 102 of a flow channel body 101. In this case, a main flow channel 105 for use to measure the physical quantity is formed by capping the recess 102 of the flow channel body 101 with a flow channel lid 106 from over the recess 102. That is to say, it was common to use three members, namely, the flow channel body 101, the sub-flow channel forming member 103, and the flow channel lid 106, to form the main flow channel 105 and the sub-flow channel 104.

However, the present inventors discovered that such a method using the three members required a complicated configuration. Thus, to overcome such a problem with the known art, the present inventors conceived the subject-matter of the present disclosure.

Thus, a physical quantity measuring device according to the present disclosure includes a flow channel body, a flow channel lid, a main flow channel, a flow rate measuring sensor, a signal processing unit, an upstream opening, a downstream opening, and a sub-flow channel. The flow channel body has an internal space with an opening. The flow channel lid is used to close the opening. The main flow channel is formed in the internal space. The flow rate measuring sensor is provided for the main flow channel. The signal processing unit measures a flow rate of a fluid on receiving a signal from the flow rate measuring sensor. The upstream opening is provided upstream of the main flow channel. The downstream opening is provided downstream of the main flow channel. The sub-flow channel is provided outside the main flow channel to connect the upstream opening and the downstream opening to each other. The sub-flow channel is formed as a region surrounded with the flow channel body and the flow channel lid. In this manner, a main flow channel for use to measure a physical quantity and a sub-flow channel, to which water drops are caused to flow out, may be formed of only two members, namely, the flow channel lid having a raised shape and the flow channel body having the recessed space, by capping the former with the latter. As used herein, the phrase "outside the main flow channel" for which the sub-flow channel is provided refers to a space other than the space serving as the main flow channel which forms part of the space defined by the flow channel body and the flow channel lid.

Embodiments of the present disclosure will now be described in detail with reference to the accompanying drawings. Note that unnecessarily detailed description will be omitted. For example, detailed description of already well-known matters and redundant description of substantially the same configuration will be omitted.

It should also be noted that the accompanying drawings and the following description are provided by the applicant to help one of ordinary skill in the art understand the present disclosure fully and should not be construed as limiting the scope of the present disclosure, which is defined by the appended claims.

### (First embodiment)

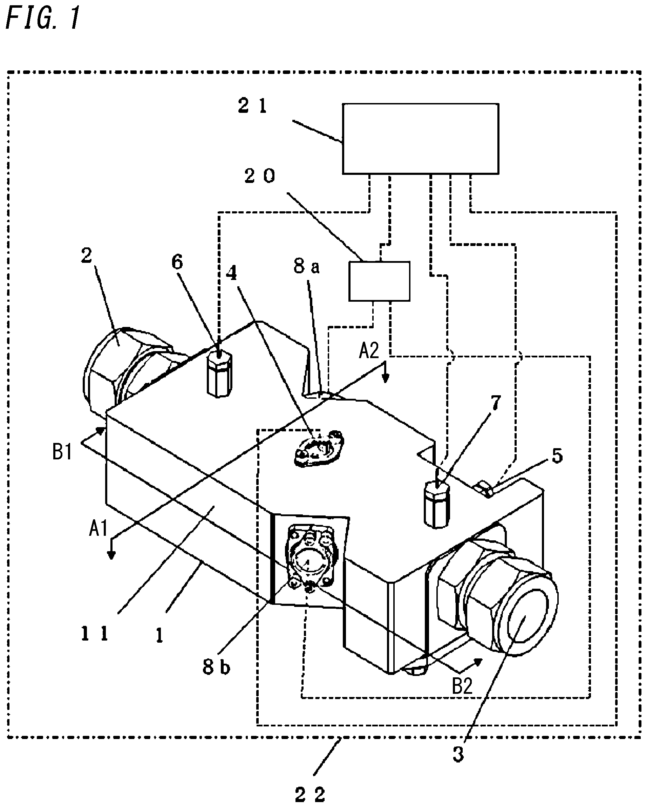

A first embodiment will now be described with reference to FIGS. 1-5B.

### [1-1. Configuration]

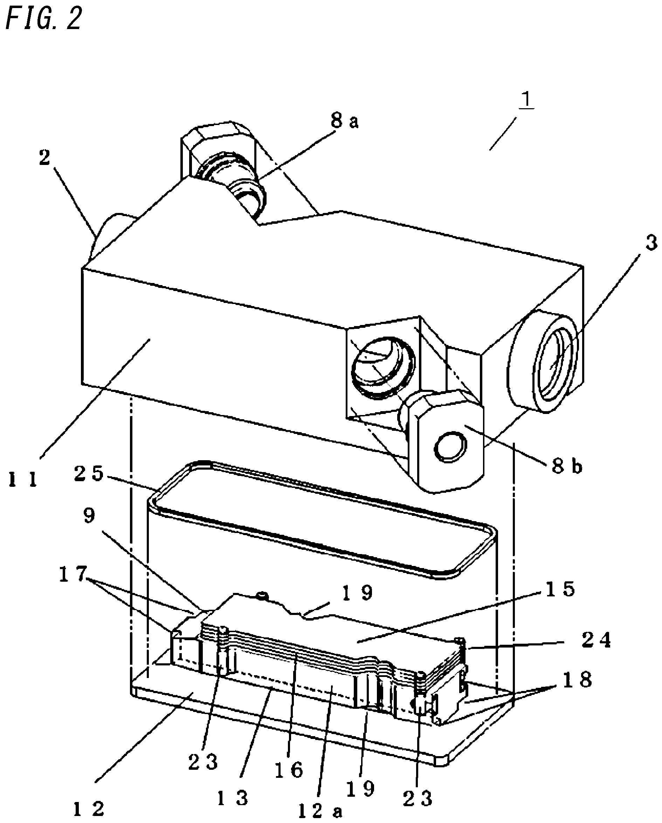

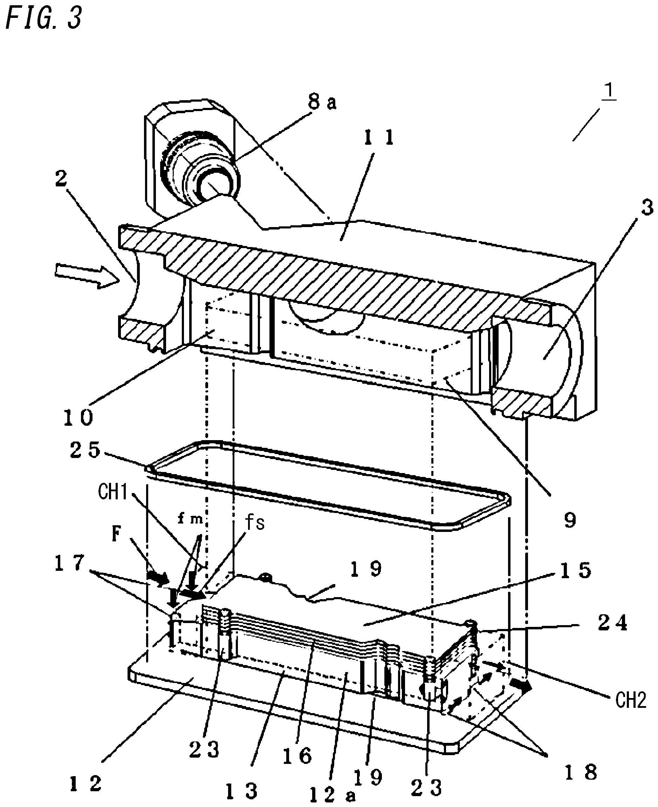

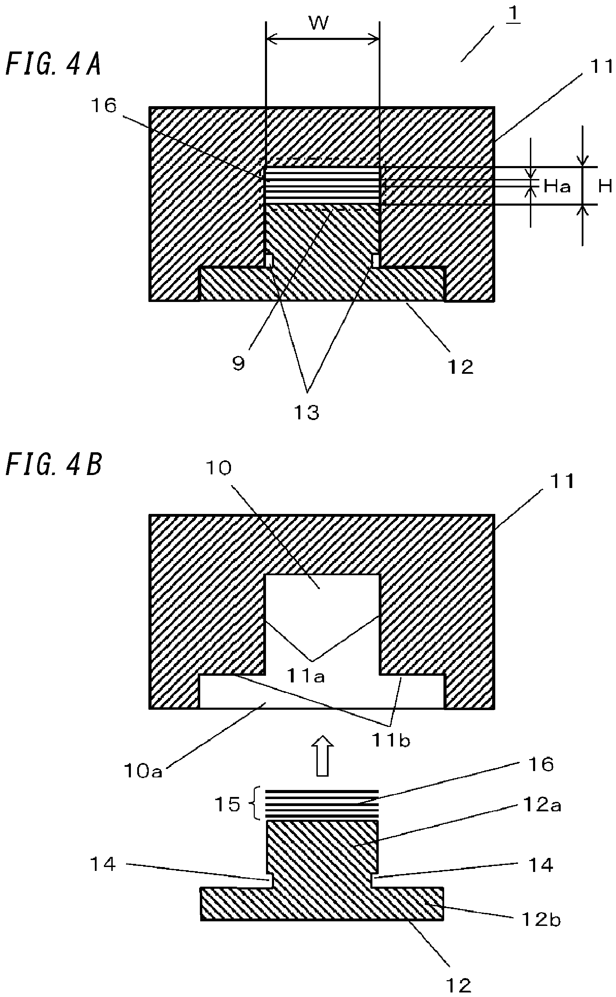

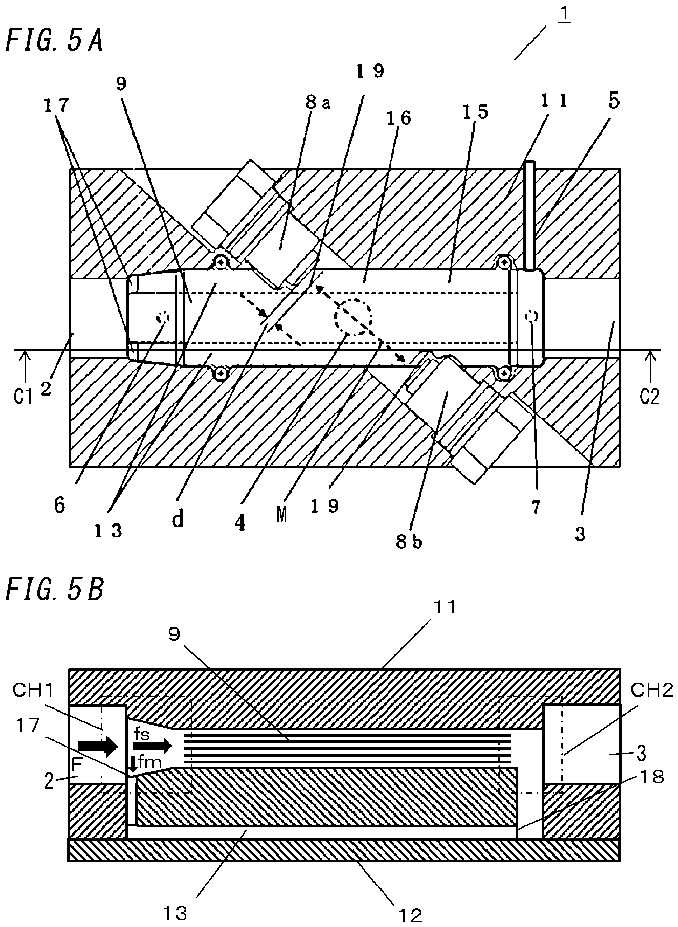

FIG. 1 illustrates a configuration for a physical quantity measuring device as well as a perspective view illustrating the appearance of a flow channel part according to a first embodiment of the present disclosure. FIG. 2 is an exploded diagram of the flow channel part shown in FIG. 1. FIG. 3 is a partially cutaway exploded diagram of the flow channel part shown in FIG. 1. FIGS. 4A and 4B are a cross-sectional view and an exploded diagram of the flow channel part taken along a plane A1-A2 shown in FIG. 1. FIGS. 5A and 5B are cross-sectional views of the flow channel part taken along a plane B1-B2 shown in FIG. 1 and a plane C1-C2 shown in FIG. 5A, respectively.

In FIG. 1, the flow channel part 1 includes a fluid inlet port 2, through which a fluid under measurement flows in, and a fluid outlet port 3, through which the fluid under measurement flows out. In addition, the flow channel part 1 further includes a pressure sensor 4, a relative humidity sensor 5 (hereinafter simply referred to as a "humidity sensor"), temperature sensors 6, 7 provided at upstream and downstream points in the flowing direction, and ultrasonic transducers (flow rate measuring sensors) 8a, 8b arranged to face each other obliquely to the flowing direction at upstream and downstream points in the flowing direction.

In FIGS. 2, 3, 4A, and 4B to be referred to in the following description, the illustration of the pressure sensor 4, the humidity sensor 5, and the temperature sensors 6, 7 and illustration of their mounting holes, for example, are omitted.

As shown in FIGS. 4A and 4B, which are cross-sectional views taken along the plane A1-A2 shown in FIG. 1, the flow channel part 1 is formed as a combination of a flow channel lid 12 and a flow channel body 11 by inserting a raised portion 12a of the flow channel lid 12 having a convex up shape to close an opening 10a of the flow channel body 11 having a concave down internal space 10. The main flow channel 9 where the flow rate of the fluid under measurement is measured is formed as the space left between the tip of the raised portion 12a of the flow channel lid 12 and the internal space 10 with a flat plate portion 12b of the flow channel lid 12 abutted onto a step portion 11b of the flow channel body 11. In FIG. 3, the space corresponding to the main flow channel 9 is indicated by the one-dot chain.

Also, in FIG. 4A, a sub-flow channel 13 is a region surrounded with a groove 14 provided on the side surface of the raised portion 12a of the flow channel lid 12 and a recess side surface 11a of the flow channel body 11.

As shown in FIG. 4A, the main flow channel 9 on which the flow rate of the fluid under measurement is measured has a rectangular cross section, of which the longer sides are indicated by a width W and the shorter sides are indicated by a height H. A multilayer portion 16 is formed by dividing the main flow channel 9 into multiple layers with partition plates 15 which are arranged substantially horizontally. A stereoscopic appearance of the main flow channel 9 is as shown in FIG. 3.

As shown in FIG. 4A, the shorter-side height Ha of each of the multiple layers divided is less than the height H of the main flow channel 9 that has not been divided yet. Each of the multiple layers of the multilayer portion 16 comes to have a larger aspect ratio (W/Ha) than the main flow channel 9 that has not been divided yet. This improves the two-dimensional distribution of the flow, thus contributing to making the flow velocity distribution more uniform along the width of the main flow channel 9. In addition, making the respective shorter-side heights Ha of the multiple layers uniform also increases the degree of uniformity of the flow velocity distribution between the respective layers, thus enabling rectifying the flow as a whole.

As shown in FIGS. 3, 5A, and 5B, an upstream part of the sub-flow channel 13 is connected to an upstream opening 17, which is provided upstream of the main flow channel 9, and a downstream part of the sub-flow channel 13 is connected to a downstream opening 18, which is provided downstream of the main flow channel 9. As can be seen, the sub-flow channel 13 is located outside the main flow channel 9 and disposed downside in the gravity direction with respect to the main flow channel 9.

As shown in FIG. 5A, in the multilayer portion 16, the pair of ultrasonic transducers 8a, 8b are arranged to face each other diagonally to cause an ultrasonic wave to travel across the flow of the fluid under measurement in the flowing direction of the fluid under measurement. In addition, a part of the upstream ultrasonic transducer 8a and a part of the downstream ultrasonic transducer 8b are arranged to protrude into the multilayer portion 16.

In FIG. 5A, the dashed arrow M indicates an ultrasonic wave propagation path between the ultrasonic transducers 8a, 8b. To allow the ultrasonic transducers 8a, 8b to protrude into the flow of the fluid under measurement, the partition plates 15 are provided with cutouts 19, thereby preventing the ultrasonic transducers 8a, 8b from abutting on any of the partition plates 15. In addition, in these cutouts 19, the gap d between the tip of the ultrasonic transducer 8a, 8b, serving as an ultrasonic wave transmitting/receiving portion, and each of the partition plates 15 has its dimension set to cause water drops in the fluid under measurement to fall down without being collected, sticking due to surface tension, and stagnating at the tip of the ultrasonic transducer 8a, 8b.

In addition, as shown in FIG. 1, various types of sensors such as the temperature sensors 6, 7, the pressure sensor 4, and the humidity sensor 5 are arranged on the flow channel part 1 to measure the temperature, pressure, and relative humidity of the fluid under measurement. These sensors, as well as the ultrasonic transducers 8a, 8b, are all mounted on the flow channel body 11.

As shown in FIG. 5A, the temperature sensors 6, 7 are provided at upstream and downstream points on the ultrasonic wave propagation path M on which the flow velocity is measured and are arranged such that their average value corresponds to a temperature at the middle point of the ultrasonic wave propagation path M. Meanwhile, the pressure sensor 4 is arranged at the middle point of the ultrasonic wave propagation path M to be adjacent to the outermost layer of the multilayer portion 16. However, the fluid is allowed to pass smoothly inside the main flow channel 9 due to the presence of the cutouts 19, thus allowing an average pressure to be detected. Furthermore, the humidity sensor 5 is disposed downstream of the multilayer portion 16. This arrangement is adopted to allow the humidity sensor 5 to make measurements at a point where the humidity sensor 5 does not adversely affect (e.g., disturb) the ultrasonic wave propagation path M and is affected much less significantly by water drops, for example.

Next, a configuration for a signal processing system will be described with reference to FIG. 1. A control unit 20 is electrically connected to the ultrasonic transducers 8a, 8b and is configured to transmit and receive a signal to/from the ultrasonic transducers 8a, 8b. In addition, a signal processing unit 21 is provided to receive a signal from the control unit 20 and perform flow rate calculation processing. This signal processing unit 21 transmits and receives signals to/from not only the control unit 20 but also the pressure sensor 4, the humidity sensor 5, and the temperature sensors 6, 7 as well. The signal processing unit 21 is electrically connected to these sensors to perform not only the flow rate calculation processing but also various types of arithmetic processing as well.

In this manner, a physical quantity measuring device 22 is formed by the flow channel part 1, the control unit 20, and the signal processing unit 21.

As shown in FIG. 2, in this embodiment, the multilayer portion 16 has six layers formed by the five partition plates 15. Next, it will be described how to assemble these partition plates 15.

As shown in FIG. 2, the raised portion 12a of the flow channel lid 12 includes mounting portions 23 which are provided at upstream and downstream points, respectively, and each of which has a screw hole for assembling the partition plates 15. Each of the partition plates 15 has through holes (not shown) at respective corners corresponding to the mounting portions 23. With the partition plates 15 sequentially stacked one on top of another via spacers 24 to leave a gap Ha between each pair of partition plates 15 which are vertically adjacent to each other, the partition plates 15 are fixed by fastening screws inserted into the mounting portions 23.

The multilayer portion 16, formed by assembling the partition plates 15 in this manner, is mounted to the flow channel lid 12 having the raised shape. The flow channel body 11 and the flow channel lid 12 are integrated together via a hermetically sealing rubber seal 25 to form the flow channel part 1.

### [1-2. Operation]

Next, it will be described how the physical quantity measuring device 22 having such a configuration operates and works.

A procedure of assembling the flow channel part 1 will be described with reference to FIG. 3. First, the partition plates 15 are sequentially stacked one on top of another via the spacers 24 to leave a gap Ha between each pair of partition plates 15 as shown in FIG. 4A. Next, the partition plates 15 thus assembled is fixed to the mounting portions 23 with screws. A multilayer portion 16 formed by assembling the partition plates 15 in this manner is mounted onto the raised portion 12a of the flow channel lid 12. This flow channel lid 12 is capped with the flow channel body 11 having the concave down internal space 10 from over the flow channel lid 12, thereby assembling the flow channel part 1 with a hermetical seal ensured by pressing the rubber seal 25. In this case, the space where the multilayer portion 16 is disposed will serve as the main flow channel 9. In addition, referring to the cross-sectional view shown in FIG. 4A, the groove 14 provided on the side surface of the raised portion 12a of the flow channel lid 12 will be a region surrounded with the recess side surface 11a of the flow channel body 11 and will serve as the sub-flow channel 13.

As can be seen from the description of this process step, the main flow channel 9 and the sub-flow channel 13 may be formed simultaneously just by capping the flow channel lid 12 having the groove 14 to form the sub-flow channel 13 with the flow channel body 11 from over the flow channel lid 12. This contributes to not only cutting down the cost but also improving the operation efficiency as well, because only two members are required. In addition, the groove 14 to form the sub-flow channel 13 is provided on a side surface of the raised portion 12a of the flow channel lid 12, thus enabling performing the assembling process while monitoring what is going on the sub-flow channel 13. This makes it easier to check the sub-flow channel 13 for any abnormality such as the deformation of the flow channel and presence of any foreign particles.

Next, it will be described with reference to FIGS. 3, 4A, 4B, 5A, and 5B how the fluid under measurement flows.

In FIG. 3, the fluid under measurement flows into the flow channel part 1 through the fluid inlet port 2 and flows out of the flow channel part 1 through the fluid outlet port 3. Specifically, the fluid under measurement flows through the flow channel part 1 in the following manner.

First, the flow F of the fluid under measurement which has flowed into the flow channel part 1 through the fluid inlet port 2 with the shape of a pipe is divided, at an inlet space CH1 with an increased cross-sectional area in the flowing direction, into a flow fs running toward the main flow channel 9 implemented as the multilayer portion 16 and a flow fm running toward the upstream opening 17. The flow fs running toward the main flow channel 9 passes through the multilayer portion 16 and then reaches an outlet space CH2.

Meanwhile, the flow fm running toward the upstream opening 17 passes through the sub-flow channel 13 and then flows out through the downstream opening 18 to reach the outlet space CH2. These two flows fs, fm are confluent with each other in the outlet space CH2. Then, the confluent flow runs out of the flow channel part 1 through the fluid outlet port 3. The positional relationship between the main flow channel 9 and the sub-flow channel 13 is illustrated in FIG. 4A as a cross section perpendicular to the flowing direction and illustrated in FIG. 5B as a cross section parallel to the flowing direction.

As shown in FIG. 5A, the pair of ultrasonic transducers 8a, 8b are arranged with respect to the flow of the main flow channel 9 and the flow rate is measured by using these ultrasonic transducers 8a, 8b as will be described later. In addition, the pressure and temperature of the flow along the main flow channel 9 are measured by the pressure sensor 4 and the temperature sensors 6, 7, respectively. The humidity is measured by the humidity sensor 5, which is positioned downstream of the portion that measures the flow rate. As can be seen, the main flow channel 9 is a flow channel for measuring the physical quantity of the fluid under measurement. On the other hand, as can be seen from FIG. 5B, the sub-flow channel 13 is a flow channel provided as a bypass for the main flow channel 9 and is not used to measure any physical quantity.

Next, it will be described how droplets such as water and water drops behave when contained in the fluid under measurement.

As shown in FIGS. 3 and 5B, the flow channel part 1 is installed to have such an orientation that makes its horizontal or downstream part downward in the gravity direction. Under such a condition, part of the water and droplets (hereinafter referred to as a "bypass fluid") flowing in through the fluid inlet port 2 along with the fluid under measurement is caused to fall down by gravity at the inlet space CH1 with an increased cross-sectional area and flow into the sub-flow channel 13 through the upstream opening 17. Thereafter, the bypass fluid flows toward a downstream point inside the sub-flow channel 13 and then flows out into the outlet space CH2 through the downstream opening 18 provided at a downstream point. Then, the bypass fluid is confluent with the flow that has passed through the main flow channel and then flows out through the fluid outlet port 3. In this case, the bypass fluid that has flowed through the sub-flow channel 13 may be easily confluent with the flow along the main flow channel partly due to the attraction effect produced by the flow along the main flow channel. In this manner, the water and droplets that have flowed into the sub-flow channel 13 may be bypassed without interfering with the physical quantity measurement on the main flow channel 9.

On the other hand, in FIGS. 3 and 5B, some fluid included in the water and droplets flowing in through the fluid inlet port 2 along with the fluid under measurement is not caused to fall down by gravity at the inlet space CH1 or flow into the sub-flow channel 13 through the upstream opening 17. Such a fluid flows into the multilayer portion 16 of the main flow channel 9.

Part of such a fluid is condensed and collected onto the partition plates 15 and flows as a flowing liquid on the surface of the partition plates 15 toward a downstream point. At this time, other small droplets which are not condensed or collected onto the partition plates are partially absorbed into this flowing liquid, thus contributing to further reducing the water and droplets contained in the fluid under measurement.

Next, it will be described with reference to FIGS. 5A and 5B how to prevent the water and droplets flowing into the multilayer portion 16 from adhering to the ultrasonic transducers 8a, 8b.

By configuring the ultrasonic transducers 8a, 8b to protrude into the multilayer portion 16, it becomes easier for water and droplets that have flowed on the surface of the multilayer portion 16 to adhere to the ultrasonic transducers 8a, 8b. However, in this embodiment, the partition plates 15 of the multilayer portion 16 are provided with the cutouts 19 which leave a gap d between the ultrasonic transducers 8a, 8b. This gap d has such a dimension that prevents the water and droplets from being collected due to surface tension between the ultrasonic wave transmitting and receiving surfaces of the ultrasonic transducers 8a, 8b and the cutouts 19. This significantly reduces the likelihood of the water and droplets affecting the transmitting and receiving surfaces because the water and droplets are caused to fall down.

In this manner, the fluid under measurement flowing through the multilayer portion 16 serving as a measuring unit is allowed to have reduced water and droplets so significantly as to be ready to be measured even more suitably. In addition, this may also reduce the likelihood of the ultrasonic characteristics of the ultrasonic transducers 8a, 8b that transmit and receive ultrasonic waves being deteriorated due to collection of the droplets onto their transmitting and receiving surfaces.

Next, a measuring operation will be described. As shown in FIG. 4A, the main flow channel 9 with the rectangular cross section is divided by the partition plates 15 to form the multilayer portion 16 in which each of the multiple flow channels thus formed has an increased aspect ratio, thus attempting to rectify the flow. This allows a stabilized flow to be maintained in a broad flow rate range from a low flow rate to a high flow rate. In such a state, ultrasonic waves are transmitted and received through the ultrasonic wave propagation path M by the ultrasonic transducers 8a, 8b as shown in FIG. 5A.

Such an ultrasonic wave transmission and reception operation is performed by the control unit 20 shown in FIG. 1. Based on the data thus acquired, the signal processing unit 21 may obtain the flow velocity V by the known inverse transit time difference method. The flow rate Q of the fluid under measurement may be calculated by multiplying the flow velocity V by the flow channel cross-sectional area S and further multiplying the product by a flow rate coefficient k for correction. That is to say, the flow rate Q may be calculated by the equation Q = k × V × S. At this time, using the pressure detected by the pressure sensor 4 and the temperature detected by the temperature sensors 6, 7, the signal processing unit 21 may convert the flow rate Q that has been calculated into a value in a standard state.

That is to say, the flow rate may be calculated by the known method based on the propagation time obtained by the pair of ultrasonic transducers 8a, 8b. Then, the flow rate in the standard state may be obtained by subjecting this value to temperature and pressure corrections.

In addition, the concentration of a particular gas H contained in the fluid under measurement may also be obtained by the known method based on the relative humidity provided by the humidity sensor 5 and the propagation time provided by the ultrasonic transducers 8a, 8b.

### [1-3. Advantages]

As can be seen from the foregoing description, in the exemplary embodiment described above, the physical quantity measuring device 22 forms the main flow channel 9 and the sub-flow channel 13 simultaneously by capping the flow channel lid 12 having the groove 14 to form the sub-flow channel 13 with the flow channel body 11 from over the flow channel lid 12.

This contributes to not only cutting down the cost but also improving the assembling operation efficiency as well, because only two members are required to form the main flow channel 9 and the sub-flow channel 13 while a physical quantity measuring device having the ability to remove water drops is fabricated. In addition, the groove 14 to form the sub-flow channel 13 is provided on a side surface of the raised portion 12a of the flow channel lid 12, thus enabling performing the assembling process while monitoring what is going on the sub-flow channel 13. This makes it easier to check the sub-flow channel 13 for any abnormality such as the deformation of the flow channel and presence of any foreign particles.

Furthermore, the main flow channel 9 is formed using the recessed flow channel body 11, thus allowing the ultrasonic transducers 8a, 8b, the temperature sensors 6, 7, the pressure sensor 4, and the humidity sensor 5, which are used to make measurements, to be all mounted onto the flow channel body 11, thus contributing to simplifying the overall configuration.

### (Second embodiment)

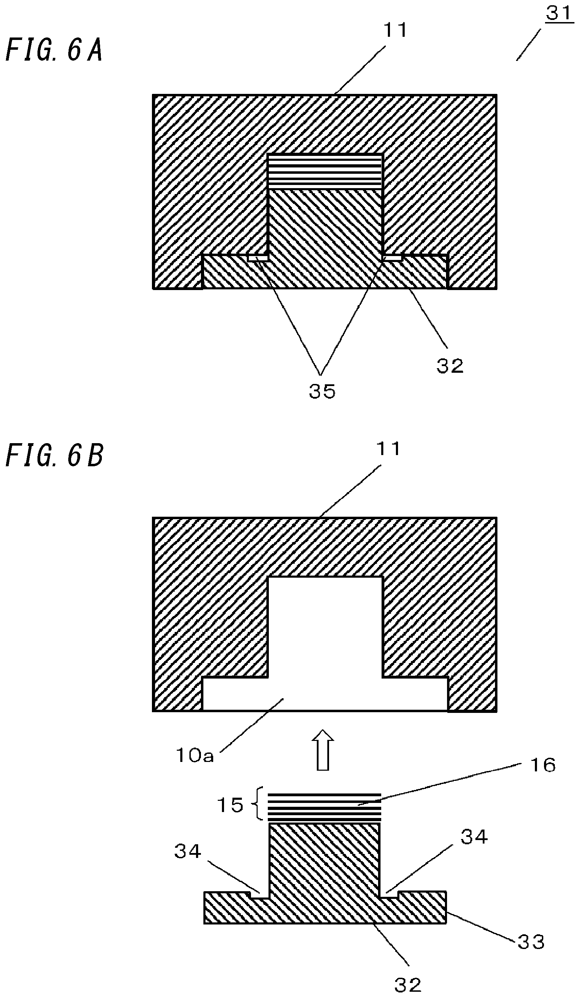

Next, a second embodiment will be described with reference to FIGS. 6A and 6B.

### [2-1. Configuration]

FIGS. 6A and 6B are schematic vertical cross-sectional views of a flow channel part of a physical quantity measuring device according to a second embodiment of the present disclosure.

The only difference of the second embodiment from the first embodiment lies in its flow channel lid. Thus, only the flow channel lid will be described with reference to FIGS. 6A and 6B. The other constituent elements of the second embodiment are the same as their counterparts of the first embodiment described above, and their description will be omitted herein. Each of those constituent elements that are the same as their counterparts of the first embodiment will be designated by the same reference sign as the counterpart's.

In FIGS. 6A and 6B, the flow channel part 31 is made up of the flow channel body 11 and a flow channel lid 32. A groove 34 is provided on a flat plate portion 33 of the flow channel lid 32. Capping the flow channel lid 32 with the flow channel body 11 from over the flow channel lid 32 allows not only the opening 10a to be closed but also a sub-flow channel 35 to be formed.

### [2-2. Operation]

Next, it will be described how the flow channel part 31 of the physical quantity measuring device having such a configuration operates and works.

In FIGS. 6A and 6B, the groove 34 to form the sub-flow channel 35 is provided on the flat-plate portion 33 of the flow channel lid 32. This allows the flow channel lid 32 to be formed by molding using a simple pair of molds. The water drops flow out through the sub-flow channel 35 in the same way as in the first embodiment described above.

### [2-3 Advantages]

As can be seen from the foregoing description, in the flow channel part 31 of the physical quantity measuring device according to this embodiment, the groove 34 to form the sub-flow channel 35 is provided on the flat-plate portion 33 of the flow channel lid 32.

This allows the flow channel lid 32 to be formed by molding using a simple pair of molds.

### (Third embodiment)

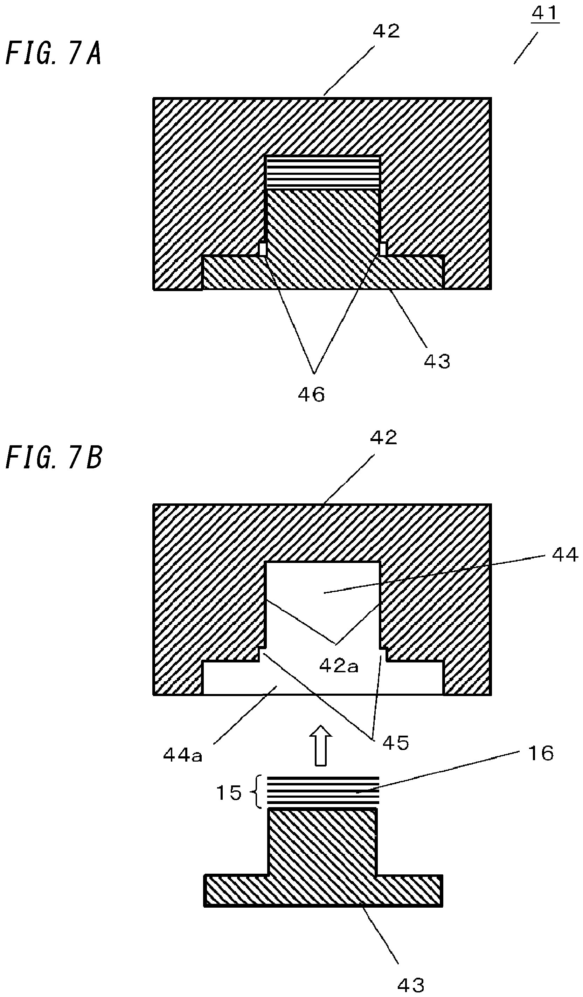

Next, a third embodiment will be described with reference to FIGS. 7A and 7B.

### [3-1. Configuration]

FIGS. 7A and 7B are vertical cross-sectional views of a flow channel part of a physical quantity measuring device according to a third embodiment of the present disclosure.

The only difference of the third embodiment from the first embodiment lies in the configuration of its sub-flow channel. Thus, only the sub-flow channel will be described with reference to FIGS. 7A and 7B. The other constituent elements of the third embodiment are the same as their counterparts of the first embodiment described above, and their description will be omitted herein.

In FIGS. 7A and 7B, a flow channel part 41 is made up of a flow channel body 42 and a flow channel lid 43. A groove 45 is provided on a recess side surface 42a that defines an internal space 44 of the flow channel body 42. Capping the flow channel lid 43 with the flow channel body 42 from over the flow channel lid 43 allows not only the opening 44a to be closed but also a sub-flow channel 46 to be formed.

### [3-2. Operation]

Next, it will be described how the flow channel part 41 of the physical quantity measuring device having such a configuration operates and works.

In FIGS. 7A and 7B, the groove 45 to form the sub-flow channel 46 is provided on the recess side surface 42a of the flow channel body 42. This allows the flow channel body 42 to be formed by molding using a simple pair of molds. The water drops flow out through the sub-flow channel 46 in the same way as in the first embodiment described above.

### [3-3 Advantages]

As can be seen from the foregoing description, in the flow channel part 41 of the physical quantity measuring device according to this embodiment, the groove 45 to form the sub-flow channel 46 is provided on the recess side surface 42a that defines the internal space 44 of the flow channel body 42.

This allows the flow channel body 42 to be formed by molding using a simple pair of molds.

The first, second, and third embodiments have been described as exemplary embodiments of the present disclosure. Note that the first, second, and third embodiments described above are only examples of the present disclosure and should not be construed as limiting. Rather, the exemplary embodiments may be readily modified, replaced, provided with some additional components, or partially omitted without departing from the scope of the present disclosure. Alternatively, a new embodiment may be created by differently combining the respective constituent elements that have been described for the first, second, and third embodiments.

Thus, some other embodiments will be described as examples.

In the first embodiment described above, the pair of ultrasonic transducers 8a, 8b are supposed to be used for measuring the flow rate. However, this configuration is only an example and should not be construed as limiting. Alternatively, a thermal sensor may also be used. In that case, there is no need to provide a pair of thermal sensors. Thus, a thermal sensor only needs to be disposed instead of the ultrasonic transducer 8a shown in FIG. 1, for example.

In the first embodiment described above, the pair of ultrasonic transducers 8a, 8b and the humidity sensor are supposed to be used as an exemplary means for measuring the concentration. Alternatively, a concentration sensor which may measure the concentration of a particular gas may also be adopted. In that case, the concentration sensor has only to be provided instead of the pair of ultrasonic transducers 8a, 8b or the thermal sensor serving as the flow rate measuring sensor and the humidity sensor.

Furthermore, in the exemplary embodiment described above, the multilayer portion 16 is formed by dividing the main flow channel 9 into multiple layers using the partition plates 15. Naturally, the main flow channel 9 may have a single layer with no partition plates 15 used.

Note that the embodiments described above are only examples of the present disclosure and should not be construed as limiting. Rather, each of those embodiments may be readily modified, replaced, provided with some additional components, or partially omitted in various manners without departing from the scope of the appended claims and their equivalents.

### (Recapitulation)

The exemplary embodiments and their variations described above are specific implementations of the following aspects of the present disclosure.

A physical quantity measuring device (100) according to a first aspect includes a flow channel body (11), a flow channel lid (12), a main flow channel (9), a flow rate measuring sensor, a signal processing unit (21), an upstream opening (17), a downstream opening (18), and a sub-flow channel (13, 35, 46). The flow channel body (11) has an internal space (10) with an opening (10a). The flow channel lid (12) is used to close the opening (10a). The main flow channel (9) is formed in the internal space (10). The flow rate measuring sensor is provided for the main flow channel (9). The signal processing unit (21) measures a flow rate of a fluid on receiving a signal from the flow rate measuring sensor. The upstream opening (17) is provided upstream of the main flow channel (9). The downstream opening (18) is provided downstream of the main flow channel (9). The sub-flow channel (13, 35, 46) is provided outside the main flow channel (9) to connect the upstream opening (17) and the downstream opening (18) to each other. The sub-flow channel (13, 35, 46) is formed as a region surrounded with the flow channel body (11) and the flow channel lid (12).

In a physical quantity measuring device (100) according to a second aspect, which may be implemented in conjunction with the first aspect, the sub-flow channel (13, 35) is formed as a groove (14, 34) provided on the flow channel lid (12).

In a physical quantity measuring device (100) according to a third aspect, which may be implemented in conjunction with the first aspect, the sub-flow channel (46) is formed as a groove (45) provided on the flow channel body (11).

In a physical quantity measuring device (100) according to a fourth aspect, which may be implemented in conjunction with any one of the first to third aspects, the main flow channel (9) has a rectangular cross-sectional shape. The physical quantity measuring device (100) includes a multilayer portion (16) formed by partition plates (15) dividing the main flow channel (9) into multiple layers. The flow rate measuring sensor is disposed in the multilayer portion (16).

In a physical quantity measuring device (100) according to a fifth aspect, which may be implemented in conjunction with any one of the first to fourth aspects, the flow rate measuring sensor is a pair of ultrasonic transducers (8a, 8b).

### Industrial Applicability

The present disclosure may have, if the fluid under measurement contains water or water drops, gas flow rate measurement with the capability of removing the water drops done at a low cost, and therefore, is broadly applicable as a flow rate measuring or concentration measuring device to fuel cells for various uses.

### Reference Signs List

- 1: Flow Channel Part
- 2: Fluid Inlet Port
- 3: Fluid Outlet Port
- 4: Pressure Sensor
- 5: Relative Humidity Sensor (Humidity Sensor)
- 6: Temperature Sensor
- 7: Temperature Sensor
- 8a: Ultrasonic transducer (Flow Rate Measuring Sensor)
- 8b: Ultrasonic transducer (Flow Rate Measuring Sensor)
- 9: Main Flow Channel
- 10: Internal Space
- 10a: Opening
- 11: Flow Channel Body
- 11a: Recess Side Surface
- 12: Flow Channel Lid
- 12a: Raised Portion
- 12b: Flat Plate Portion
- 13: Sub-Flow Channel
- 14: Groove
- 15: Partition Plate
- 16: Multilayer Portion
- 17: Upstream Opening
- 18: Downstream Opening
- 19: Cutout
- 20: Control Unit
- 21: Signal Processing Unit
- 22: Physical Quantity Measuring Device
- 23: Mounting Portion
- 24: Spacer
- 25: Rubber Seal
- 31: Flow Channel Part
- 32: Flow Channel Lid
- 33: Flat Plate Portion
- 34: Groove
- 35: Sub-Flow Channel
- 41: Flow Channel Part
- 42: Flow Channel Body
- 42a: Recess Side Surface
- 43: Flow Channel Lid
- 44: Internal Space
- 44a: Opening
- 45: Groove
- 46: Sub-Flow Channel

## Claims

1. A physical quantity measuring device comprising:
a flow channel body having an internal space with an opening;
a flow channel lid for use to close the opening;
a main flow channel formed in the internal space;
a flow rate measuring sensor provided for the main flow channel;
a signal processing unit configured to measure a flow rate of a fluid on receiving a signal from the flow rate measuring sensor;
an upstream opening provided upstream of the main flow channel;
a downstream opening provided downstream of the main flow channel; and
a sub-flow channel provided outside the main flow channel to connect the upstream opening and the downstream opening to each other,
the sub-flow channel being formed as a region surrounded with the flow channel body and the flow channel lid.

2. The physical quantity measuring device of claim 1, wherein
the sub-flow channel is formed as a groove provided on the flow channel lid.

3. The physical quantity measuring device of claim 1, wherein
the sub-flow channel is formed as a groove provided on the flow channel body.

4. The physical quantity measuring device of any one of claims 1 to 3, wherein
the main flow channel has a rectangular cross-sectional shape,
the physical quantity measuring device includes a multilayer portion formed by partition plates dividing the main flow channel into multiple layers, and
the flow rate measuring sensor is disposed in the multilayer portion.

5. The physical quantity measuring device of any one of claims 1 to 4, wherein
the flow rate measuring sensor is a pair of ultrasonic transducers.
